# EUROPEAN PATENT APPLICATION

(11) **EP 1 249 768 A2**
(43) Date of publication of application: **16.10.2002**
(21) Application number: 01000416.6
(22) Date of filing: 31.08.2001
(51) Int. Cl.: G06F 17/60

(54) **Method of ordering custom graphics kits for motor vehicles**

(30) Priority: 01.09.2000 US 653508
(71) Applicant: Ford Global Technologies, Inc., Dearborn, Michigan 48126 (US)
(72) Inventor: Fike, Craig, W, Wolverine Lake, MI 48390 (US)
(74) Representative: Messulam, Alec Moses

(57) **Abstract**

A method of ordering customer-designed graphic kits for motor vehicles includes a customer deciding to purchase a custom-designed graphic kit, a computer connected to the Internet or provider's Intranet, graphic kit design software, linking the Vehicle Identification Number to each custom design, applying the graphic kit design to the virtual vehicle and electronically sending it to the relevant parties, filtering each design for obscenity or franchise violations, determining the installation location, installing the graphic kit and delivering the motor vehicle to the customer.

## Description

The present invention relates in general to ordering custom graphic kits for motor vehicles, subsequent production of the custom graphic kit by a provider, and installation of the graphic kit by an authorised installation centre, dealership, assembly plant, or customer.

Motor vehicle purchasers have often been limited in their ability to customise their vehicle. When purchasing a vehicle, customers have been limited to a few pre-designed options and have not had the ability to customise options such as vehicle stripes or graphics. The only way for an owner to truly customise a vehicle was to turn to after-market providers. Unfortunately, this resulted in time away from the vehicle, additional expense, possible warranty issues, and having to deal with a provider not associated with the vehicle manufacturer. In short, this process was inefficient, expensive, and contributed to customer dissatisfaction.
A PCT Application No. W09815908, entitled "A Product Design Production System and Method," published April 16, 1998, describes a product selection system in which a product supplier (for example, a clock manufacturer) provides consumers, via a computer network, with digital information representing the various available component parts of a product (for example, a watch). Computer software assists the consumer in combining the component parts electronically, according to the customer's preferences, and forwards the requested combination to the product supplier. This system, however, limits the consumer to combining options from a selected list (e.g., second hand, roman numerals, etc.) and does not allow the consumer to incorporate originally-designated material into the product order.

Therefore, it is desirable to develop a process in which a customer can, at the time of purchase, customise some portion of an ordered motor vehicle, specifically, the graphics kit, which includes stripes, logos, and pictures, or customise an already-built vehicle through a reputable provider.

The present invention seeks to overcome the above-referenced problems of the prior art by providing customers with the ability to custom design and order a graphic kit for a motor vehicle.

In accordance with a first aspect of the invention, there is provided a method of providing customer-designed graphics for a product, the method comprising the steps of receiving electronically a customer-created design; creating a customer-designed graphics kit from said customer-created design; and providing said customer-designed graphics kit to a first entity for application of said customer-designed graphics kit to said product.

In accordance with a second aspect of the invention, there is provided a method of providing customer-designed graphics for a product, the method comprising the steps of receiving a customer-designed graphics kit; said customer-designed graphics kit having been created from an electronic representation of a customer-created design; and applying said customer-designed graphics kit to said product.

In accordance with a second aspect of the invention, there is provided a system for generating customer-designed graphics for a product comprising a computer network comprising a plurality of terminals at a plurality of remote locations; said computer network interacting with a customer to generate electronically a customer-created design; said computer network transferring said customer-created design via said computer network to an entity at a terminal of one of said remote locations; whereby said entity creates a customer-designed graphics kit from said customer-created design; and said entity provides said customer-designed graphics kit to a second entity for application of said customer-designed graphics kit to said product.

The invention will now be described further, by way of example, with reference to the accompanying drawings, in which:
Fig. 1 shows a schematic diagram of the computer connections between parties for the preferred method of implementing the present invention,
Fig. 2 shows a partial schematic flow diagram of the preferred method of implementing the present invention,
Fig. 3 shows a partial schematic flow diagram of the preferred method of implementing the present invention,
Fig. 4 shows a partial schematic flow diagram of the preferred method of implementing the present invention,
Fig. 5 shows a software screen display of the customer first accessing the graphic kit design software,
Fig. 6 is a screen display of the software asking a customer to identify his vehicle colour,
Fig. 7 is a screen display of the software asking a customer to choose between existing graphics or creating his own,
Fig. 8 is a screen display of the software providing different options of existing graphics to customer,
Fig. 9 is a screen display of the software providing different options of existing graphics to customer,
Fig. 10 is a screen display of the software showing the customer that he has chosen a limited edition graphic design,
Fig. 11 is a screen display of the customer opening a graphic file to upload,
Fig. 12 is a screen display of the software asking the customer to identify his preferred graphic location,
Fig. 13 is a screen display of customer moving his graphic, and
Fig. 14 is a screen display of a customer graphic in final form.

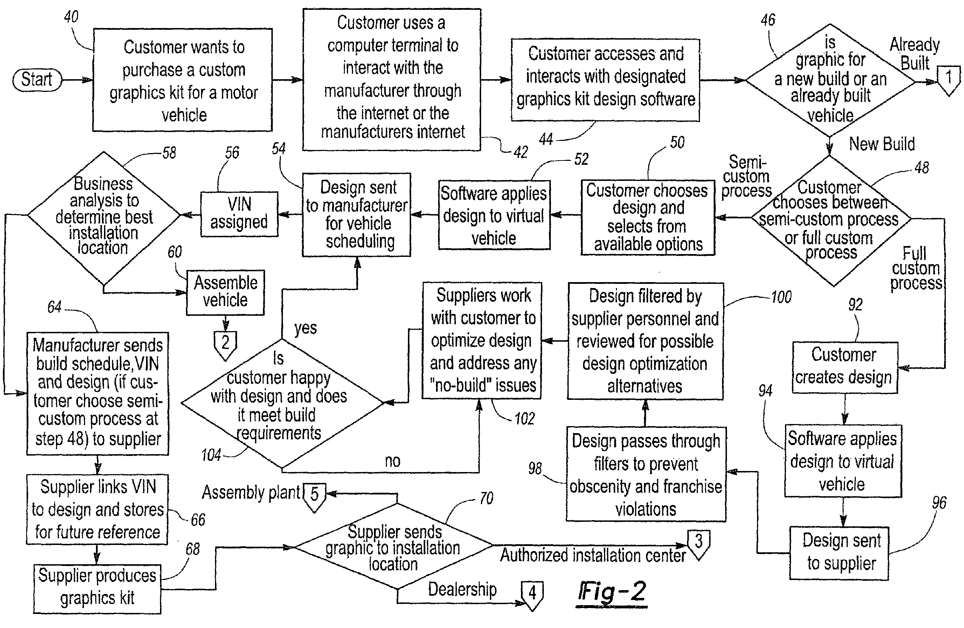

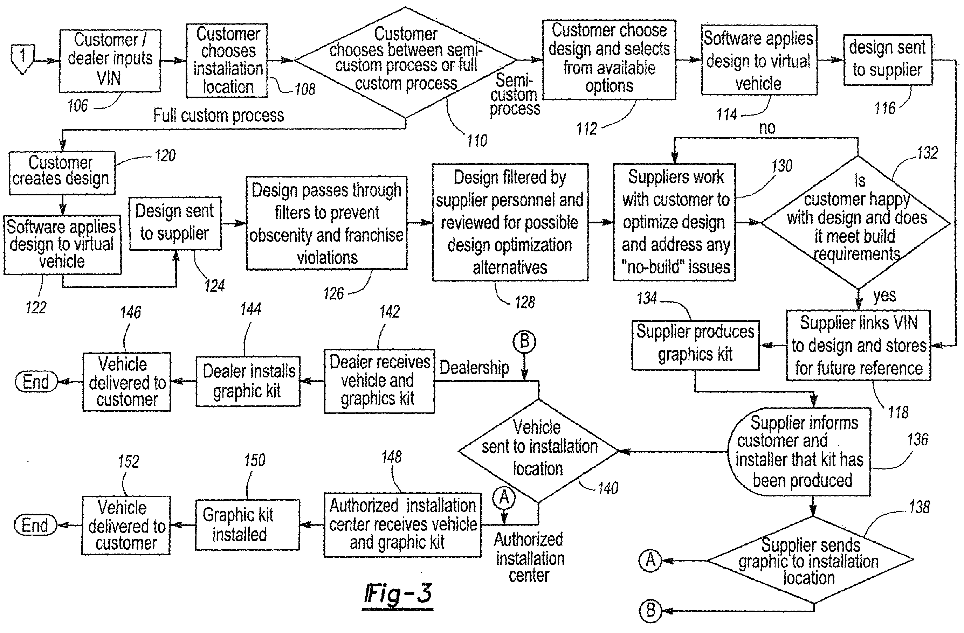

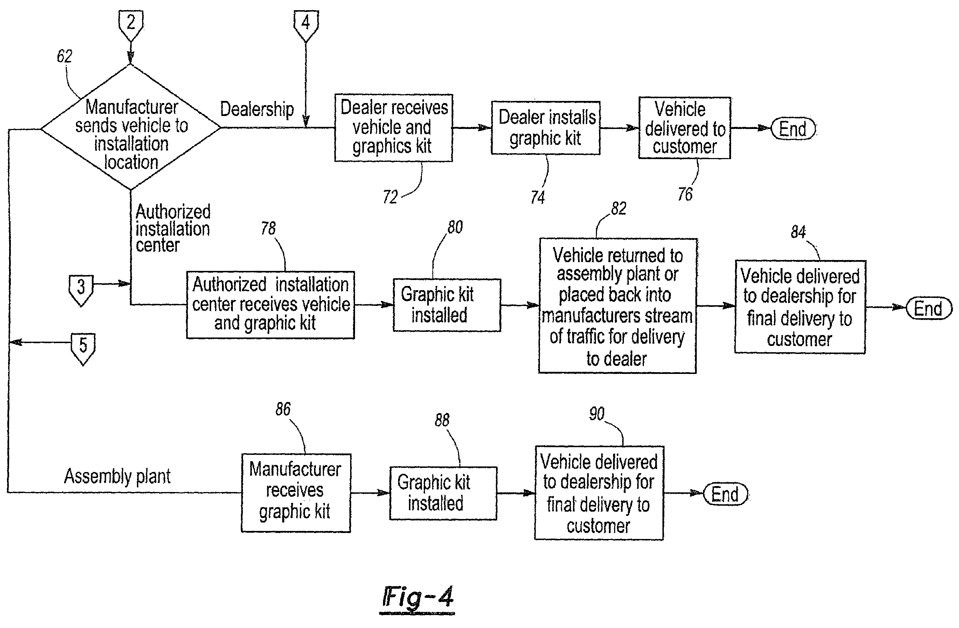

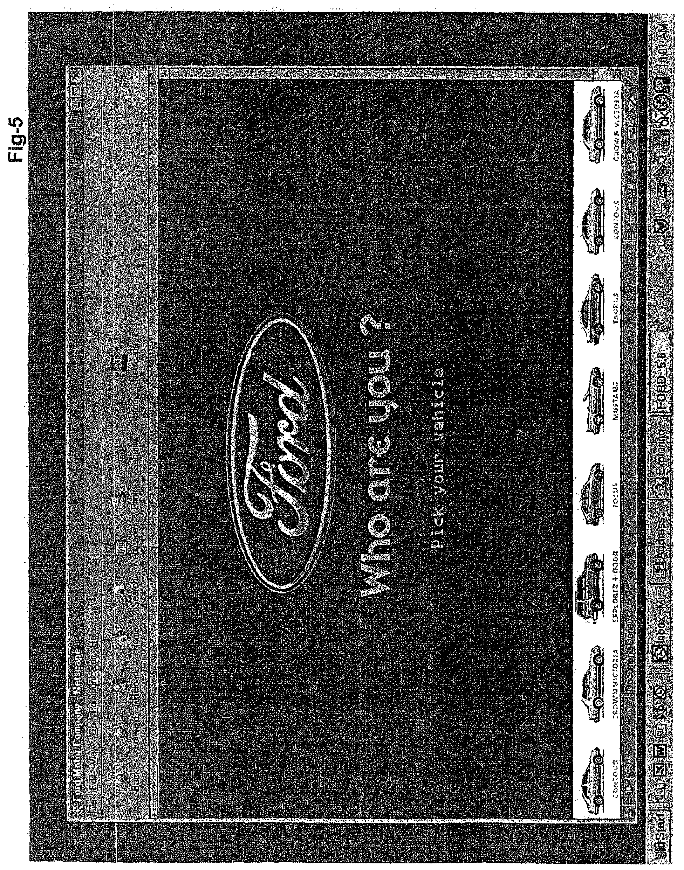

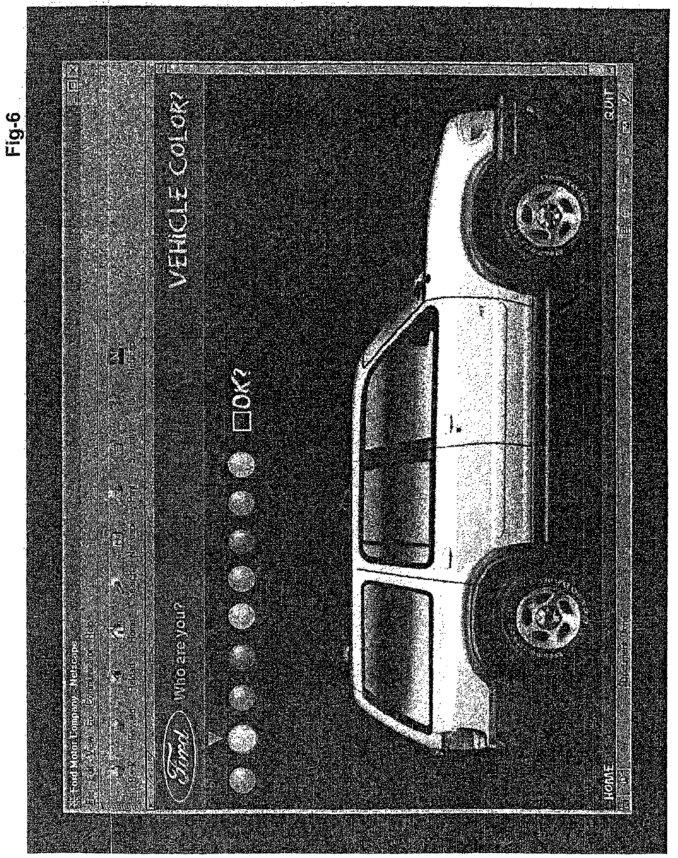

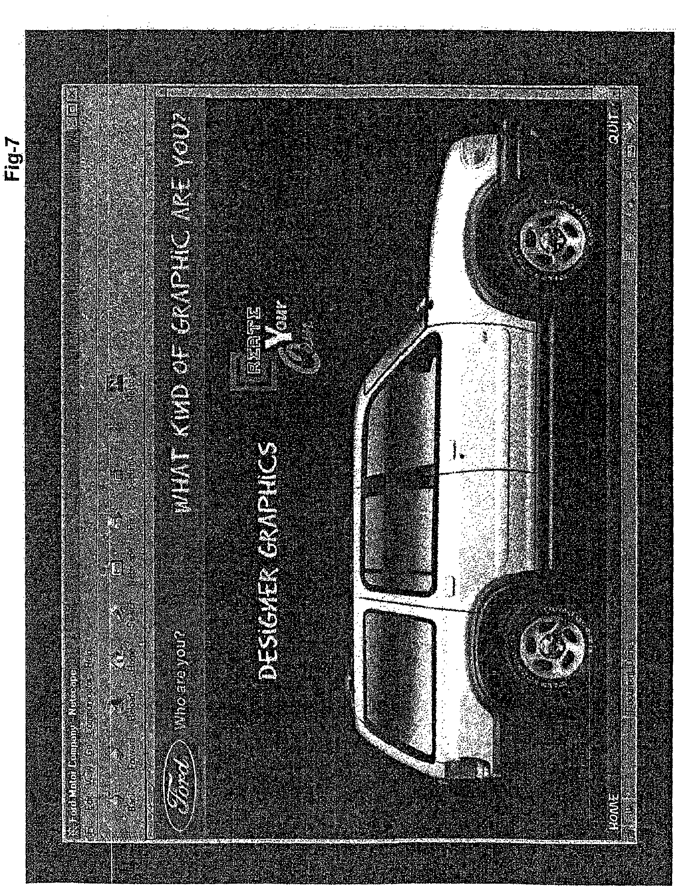

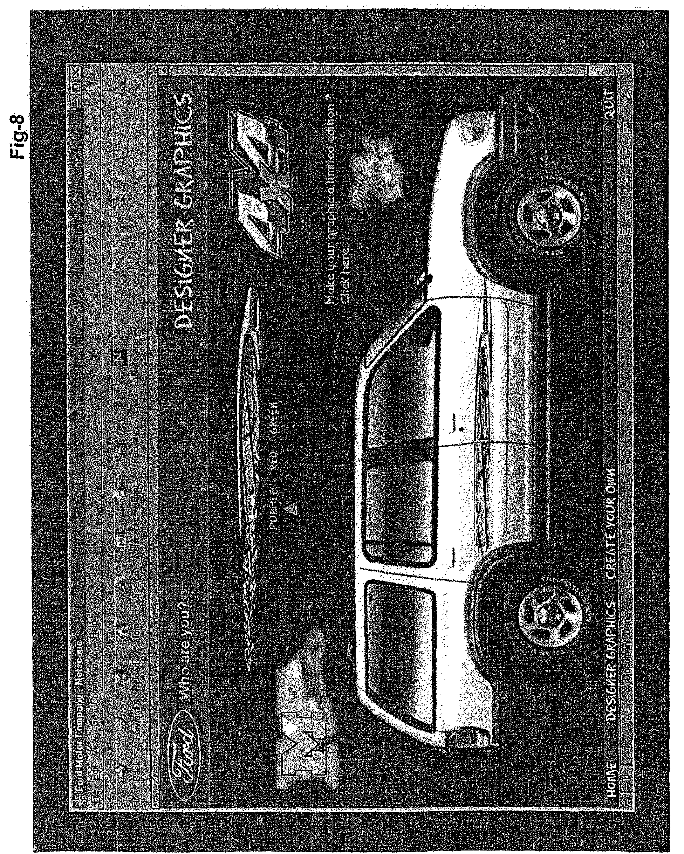

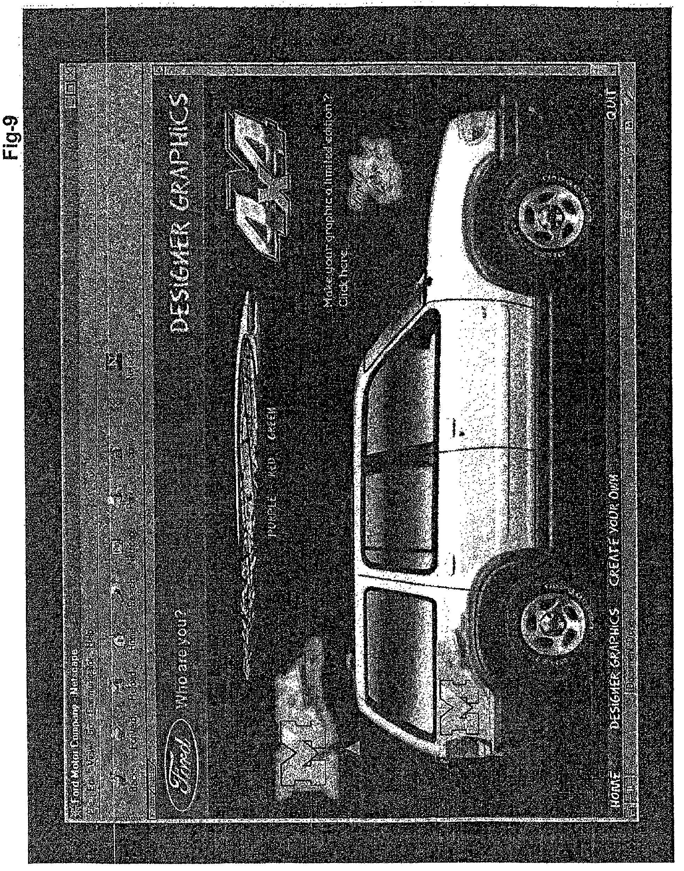

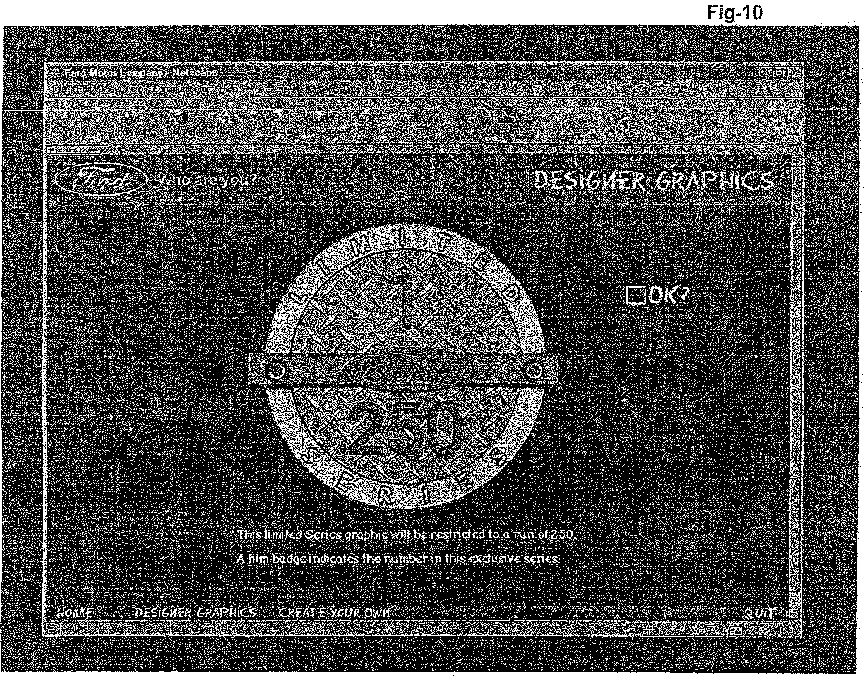

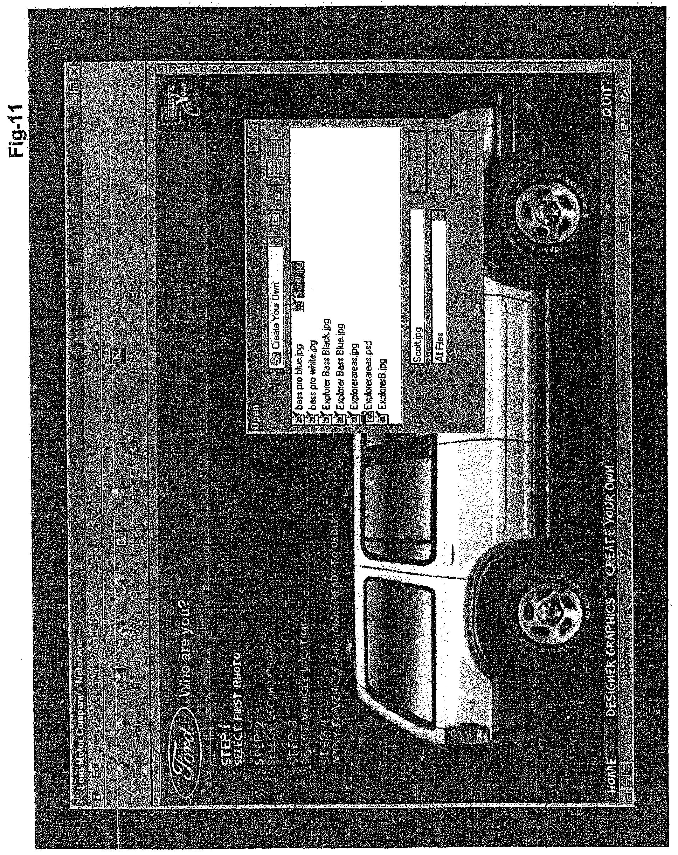

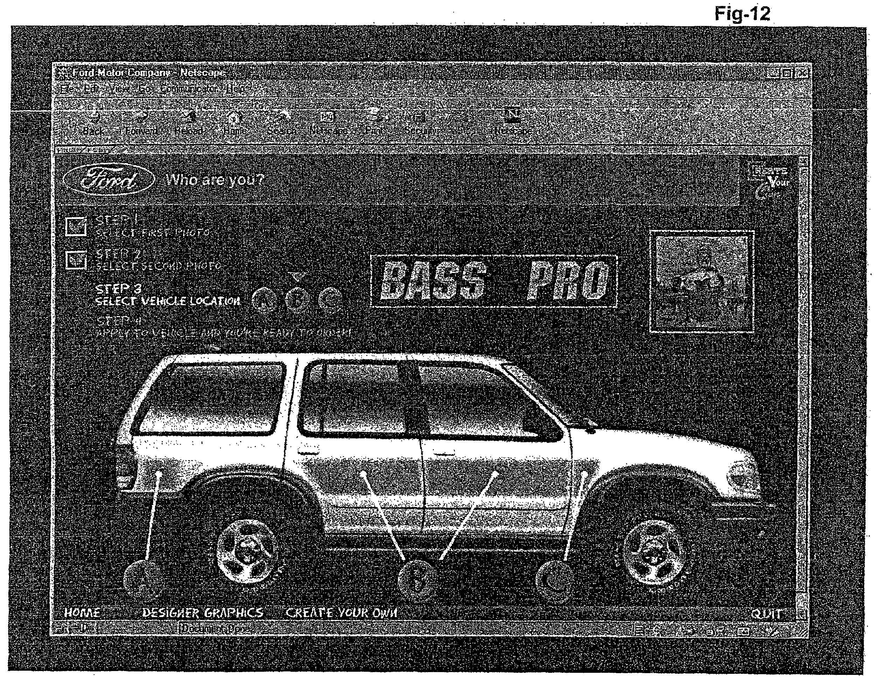

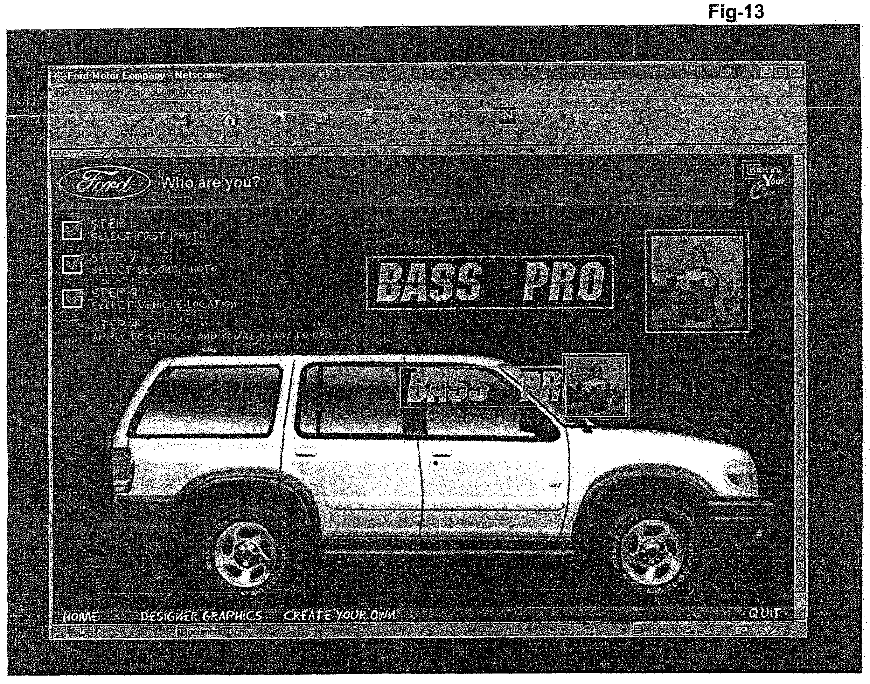

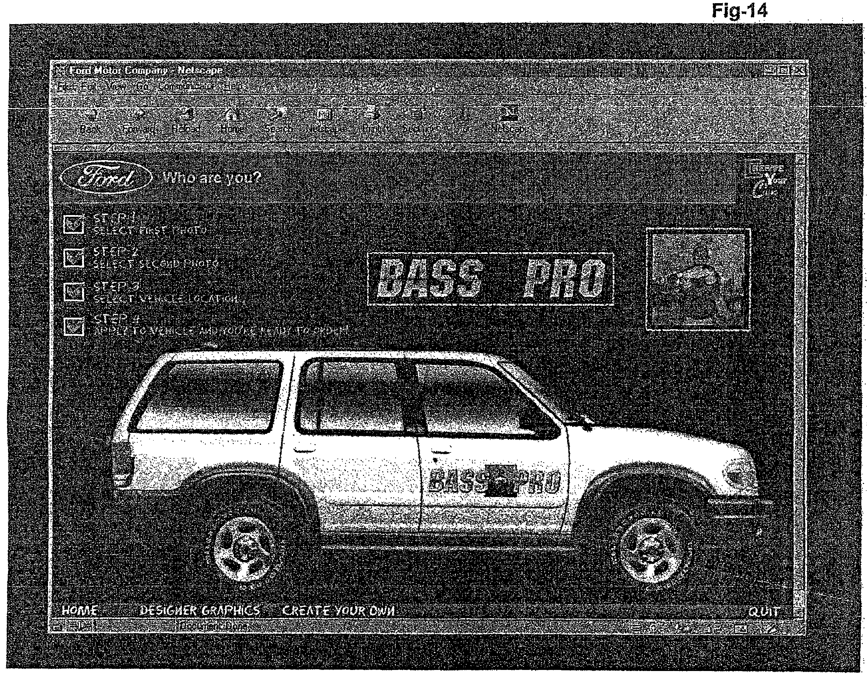

The invention provides a method of designing and ordering graphic kits for motor vehicles. The entire process is integrated, offering as much variety as possible while still providing efficient and quick build times and acceptable assembly costs.

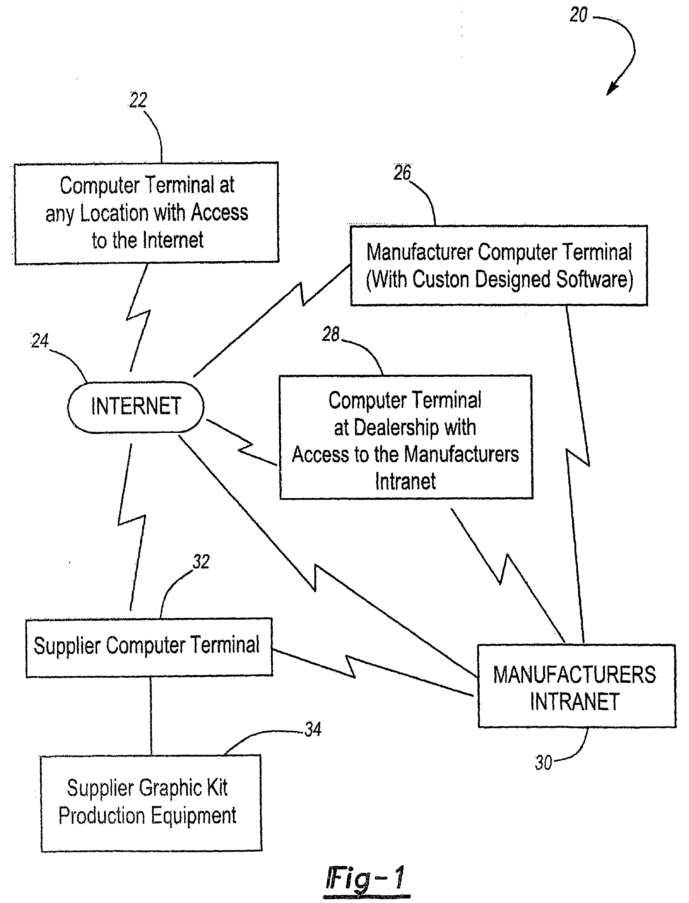

Fig. 1 shows a hardware system, 20, for implementing A method as claimed in the present invention. The system, 20, includes a terminal, 22, located anywhere with access to the Internet, 24, connected to the Internet, 24. The Internet, 24, is then connected to the manufacturer, 26, supplier, 32, dealership, 28, and manufacturer's Intranet, 30. A customer can also use a dealership's computer terminal, 28, that is connected to the Internet, 24, and manufacturer's Intranet, 30. The Intranet, 30, connects dealership, 28, to the manufacturer, 26, and supplier, 32. Finally, supplier's computer terminals, 32, are connected to supplier's graphic kit production equipment, 34.
Referring to Fig. 2, 3, and 4, the method is illustrated schematically. At Step 40, customer decides that he wants to purchase a custom graphics kit for a new or used vehicle. A graphics kit can be a variety of things from stripes and pictures to lettering (for example, advertising, racing stripes). A graphics kit is made out of special tape that adheres to a motor vehicle at desired locations and has the appearance of an elaborate paint job. At Step 42, customer uses a computer terminal to interact with manufacturer's network through the Internet or manufacturer's Intranet. A computer terminal can be located anywhere if the Internet is used or at a dealership if manufacturer's Intranet is used.
At Step 44, customer accesses and interacts with the designated graphics kit design software. Fig. 5 shows a possible software screen shot of an introduction page. At this page, customer would identify the type of vehicle he has or wants to purchase and Fig. 6 shows the page where the customer would identify the colour of his vehicle.
At Step 46, customer determines whether or not the graphics kit is for a new build or for an already built vehicle. If the graphics kit is for a new build, customer proceeds to Step 48 and chooses between a semi-custom design process, in which the customer is limited to existing design options, or a fully customised process, in which the customer can create his own graphics. Fig. 7 is a possible software screen page where customer would make this choice.
If customer chooses to use the semi-custom design process at Step 48, customer proceeds to Step 50, at which point the design software provides customer with a variety of customisation choices including graphic style, colour, shape, and size. Fig. 8 and 9 demonstrate possible options that could be made available to customer. Fig. 10 demonstrates a seal for limited edition graphics in which only a limited number would be offered to customer.
At Step 52, after customer has finished selecting from the available options, the software applies the selected design to the virtual vehicle and proceeds to electronically send the design and all relevant information (customer's name, address, dealer, etc.) to manufacturer for vehicle scheduling at Step 54.
If customer chooses to create his own design at Step 48, customer proceeds to Step 92 in which customer actually creates his own design. In creating his own design, customer will upload graphics in an approved format and use the software to indicate size, colour, and location. The software images and would accept any digitised image (for example, customer could upload a digitised photo of a new baby). Fig. 11, 12, 13, and 14 show possible screen shots of the software during this process. In Fig. 11, customer opens his uploaded, digitised graphic using the "graphic/drawing" software. In Fig. 12, customer chooses the general location. Fig. 13, customer moves the image to the desired location and Fig. 14 shows the final design. Once customer has finalised his design, the software applies the design to the virtual vehicle at Step 94 and then electronically sends the design to supplier at Step 96. At Step 98, the design passes through filters to prevent obscenity and franchise violations. At this stage of the process, the filters are computerised. At Step 100, the design is further filtered by supplier personnel as a redundant measure to check for obscenity or franchise violations. Additionally, supplier personnel review the design to provide possible design optimisation alternatives to customer in order to create the best graphic kit possible for customer's vehicle. At Step 102, supplier's personnel work directly with customer to optimise the design and address any no-build issues which may exist. At Step 104, customer determines whether or not he is happy with the design after working with supplier personnel. If customer is unhappy with the design, the process returns to Step 102 where customer continues to work with supplier personnel until a satisfactory design is obtained. Once customer is happy with the design at Step 104, the design and all relevant information (customer name, address, dealer, etc.) is electronically sent to manufacturer for vehicle scheduling at Step 54.
After vehicle scheduling, a Vehicle Identification Number (AVIN@), Step 56, is assigned to the vehicle. At Step 58, a business analysis is performed to determine the best installation location. Installation locations include the dealership, the assembly plant, or an authorised installation centre.
After the business analysis is performed at Step 58, manufacturer proceeds to assemble the vehicle at Step 60 and then sends the vehicle to the proper installation location at Step 62. Additionally, after the business analysis is performed at Step 58, manufacturer electronically sends the build schedule, VIN, and design (if the customer chose the semi-custom design process at Step 48) to the supplier at Step 64. Supplier subsequently links the VIN to the design at Step 66 and stores this information for future reference. This information is stored so that it can be accessed in the event that the graphic kit needs to be accessed in the future for repairs. It is anticipated this would be used primarily when a customer gets into an accident and the graphics kit needs to be repaired or reproduced. At Step 68, supplier produces a graphics kit and then sends the graphics kit to the appropriate installation location at Step 70.
Both Steps 62 and 70 have three possible installation alternatives as determined by the business analysis at Step 58. Manufacturer and supplier can send the vehicle and graphics kit to the dealership, to an authorised installation centre, or to the assembly plant. If dealership is determined to be the best installation location, dealer receives the vehicle and graphics kit at Step 72, proceeds to install the graphics kit at Step 74, and then delivers the vehicle to customer at Step 76. If an authorised installation centre is determined to be the best installation location, authorised installation centre receives the vehicle and graphics kit at Step 78, installs the graphics kit at Step 80, and then returns the vehicle to assembly plant or places the vehicle back into manufacturer's stream of traffic for delivery to dealership at Step 82. The vehicle is then delivered to dealership for final delivery to customer at Step 84. If assembly plant is determined to be the best installation location, manufacturer does not send the vehicle anywhere, since the vehicle is already located at the assembly plant. Therefore, manufacturer only needs to receive the graphics kit from the supplier at Step 86. Subsequently, the graphics kit installed at Step 88 and the vehicle is then delivered to dealership for final customer delivery at Step 90.
If customer determines that the graphics kit is for an already built vehicle at Step 46, the customer then proceeds to Step 110 where the VIN is input. Customer then chooses an installation location which is most convenient for him at Step 108. Customer then proceeds to Step 110 to choose between the semi-custom design process or the full custom process.
If customer chooses the semi-custom design process at Step 110, customer proceeds to Step 112 at which point the design software provides customer with a variety of customisation choices including graphic style, colour, shape, and size.
At Step 114, after customer has finished selecting from the available options, the software applies the selected design to the virtual vehicle and electronically sends the design to supplier at Step 116.
If customer chooses the full custom process at Step 110, customer proceeds to Step 120 where customer actually creates his own design. In creating his own design, customer will upload graphics in an approved format and use the graphic/drawing software previously described to indicate size, colour, and location. Once customer has finalised his design, the software applies the design to the virtual vehicle at Step 122 and then electronically sends the design to supplier at Step 124. At Step 126, the design passes through filters to prevent obscenity and franchise violations. At this stage of the process, the filters are computerised. At Step 128, the design is further filtered by supplier personnel as a redundant measure to check for obscenity or franchise violations. Additionally, supplier personnel review the design to provide possible design optimisation alternatives to customer in order to create the best graphic kit possible for customer's vehicle. At Step 130, supplier's personnel work directly with customer to optimise the design and address any no-build issues which may exist. At Step 132, customer determines whether or not he is happy with the design after working with supplier personnel. If customer is unhappy with the design, the process returns to Step 130 where customer continues to work with supplier personnel until a satisfactory design is obtained.

Once customer is happy with the design at Step 132, or the design is sent to supplier at Step 116, supplier links the VIN to the design at Step 118 and stores this information for future reference. This information is stored so that it can be accessed in the event that the graphic kit needs to be accessed in the future for repairs. It is anticipated this would be used primarily when a customer gets into an accident and the graphics kit needs to be repaired or reproduced. At Step 134, supplier produces a graphics kit and then informs customer and installer that the graphics kit has been produced, at Step 136. Supplier then sends the graphics kit to the installation location at Step 138. After receiving notice of production from supplier at Step 136, customer sends vehicle to chosen installation location at Step 140.
Both Steps 138 and 140 have two installation alternatives, the customer and supplier can send the vehicle and graphics kit to a dealership, or an authorised installation centre. If a dealership is determined to be the best installation location, dealer receives the vehicle and graphics kit at Step 142, proceeds to install the graphics kit at Step 144, and then delivers the vehicle to customer at Step 146. If an authorised installation centre is determined to be the best installation location, authorised installation centre receives the vehicle and graphics kit at Step 148, installs the graphics kit at Step 150, and then delivers vehicle to customer at Step 152.
The previous description provides the best mode for carrying out the invention. However, many alternatives to this process exist. First, this process does not need to be performed only with the original manufacturer. This process could allow any manufacturer or provider to provide custom graphics for any make of vehicle. Second, the party or parties actually performing the role of the manufacturer and supplier in the previous description can vary. For example, it is possible that the original equipment manufacturer (OEM) produces the graphic kit and does not outsource this work. In this event, the general process remains the same but the flow of information between parties decreases because the supplier is not involved. In the same regard, an OEM may not be involved in the process at all, instead it is possible for a separate party or company to perform both the manufacturer and supplier roles. In this case, the original party could provide the software, design interaction, production, and installation responsibilities. Installation could also be performed at home by customer. In this case, where the graphic kit is shipped changes but the basic process still remains the same.

## Claims

1. A method of providing customer-designed graphics for a product, the steps comprising:
receiving electronically a customer-created design;
creating a customer-designed graphics kit from said customer-created design; and
providing said customer-designed graphics kit to a first entity for application of said customer-designed graphics kit to said product.

2. A method of providing customer-designed graphics for a product, the steps comprising:
receiving a customer-designed graphics kit;
said customer-designed graphics kit having been created from an electronic representation of a customer-created design; and
applying said customer-designed graphics kit to said product.

3. A method as claimed in Claim 1 or 2, wherein said first entity comprises a manufacturer of said product.

4. A method as claimed in Claim 3, wherein said application of said customer-designed graphics kit to said product comprises incorporating said application into a manufacturing process of said product.

5. A method as claimed in any preceding claim,
wherein said product comprises a motor vehicle.

6. A method as claimed in any preceding claim, further comprising the steps of:
generating archive information that associates said customer-designed graphics kit with an identification number of said product; and
storing said archive information for future reference.

7. A method as claimed in any preceding claim, further comprising the steps of filtering said customer-created design to identify obscenity and franchise violations.

8. A method as claimed in Claim 7, wherein said filter is comprised of a computer with variable preprogrammed factors to identify obscenity and franchise violations.

9. A method as claimed in Claim 7, wherein said filter includes human review of said customer-created graphic design to identify obscenity and franchise violations.

10. A method as claimed in Claim 7, wherein said filter is comprised of a combination of said computer and said human review.

11. A system for generating customer-designed graphics for a product comprising:
a computer network comprising a plurality of terminals at a plurality of remote locations;
said computer network interacting with a customer to generate electronically a customer-created design;
said computer network transferring said customer-created design via said computer network to an entity at a terminal of one of said remote locations;
whereby said entity creates a customer-designed graphics kit from said customer-created design; and
said entity provides said customer-designed graphics kit to a second entity for application of said customer-designed graphics kit to said product.

12. A system as claimed in Claim 11, wherein said computer network:
generates archive information that associates said customer-designed graphics kit with an identification number of said product; and
stores said archive information for future reference.

13. A system as claimed in Claim 11 or 12, wherein said computer network provides said customer with the option of choosing a semi-custom design or a fully-custom design.

14. A system as claimed in Claim 11, 12 or 13,
wherein said computer network includes connections through the Internet or said second entity's Intranet.
